# EUROPEAN PATENT SPECIFICATION

(11) **EP 3 383 746 B1**
(45) Date of publication and mention of the grant of the patent: **28.08.2019**
(21) Application number: 16806056.4
(22) Date of filing: 02.12.2016
(51) Int. Cl.: B65B 9/067, B65B 29/00, B65B 51/22, B65B 51/30, B29C 65/08, B29L 31/00, B29C 65/74, B29C 65/00, B65B 1/06, B65B 59/00, B65B 51/26, B65B 61/06, B65B 9/207, B65B 1/02, B29C 65/02, B65B 61/12

(54) **SEALING DEVICE**
DICHTUNGSVORRICHTUNG
DISPOSITIF D'OBTURATION

(30) Priority: 02.12.2015 EP 15197524
(43) Date of publication of application: 10.10.2018
(73) Proprietor: Swedish Match North Europe AB, 118 85 Stockholm (SE)
(72) Inventor: PERSSON, Tony, SE-524 93 Herrljunga (SE)
(74) Representative: Valea AB
(86) International application number: PCT/EP2016/079590
(87) International publication number: WO 2017/093486

(56) References cited:
- EP-A1- 0 712 782
- EP-A1- 1 732 745
- EP-A2- 0 999 139
- WO-A1-2015/011597
- WO-A1-2015/107484
- DE-A1-102013 212 697
- GB-A- 2 248 796
- US-A- 4 560 427
- US-A1- 2010 101 588
- US-A1- 2013 228 288
- US-B2- 8 151 802

## Description

### TECHNICAL FIELD

The present invention relates to a sealing device for sealing a packaging material enclosing a filling material to provide portion-packed oral pouched snuff products. The present invention further relates to an arrangement for manufacturing of portion-packed oral pouched snuff products, which arrangement comprises such a sealing device. The present invention also relates to a method for portion-packing of an oral pouched snuff product.

### BACKGROUND

Pouched smokeless tobacco products may be produced by measuring portions of the smokeless tobacco composition and inserting the portions into a nonwoven tube. US 4,703,765 discloses a device for packaging precise amounts of finely divided tobacco products, such as snuff tobacco or the like, in a tubular packaging material into which snuff portions are injected via a fill tube. Downstream from the tube, welding means are positioned for transverse sealing of the packaging material, and also cutting means for severing the packaging material in the area of the transverse seal to thus form discrete or individual portion packages. EP 2 428 450 B1 relates to a snus dosing method, wherein a portion of tobacco is filled into a dosing chamber of a dosing device and then blown out of the dosing chamber by means of blow-out air to which water vapor has been added.

Pouched smokeless tobacco products may alternatively be produced by placing portions of moist snuff on a nonwoven web using a pouch packer machine in accordance with the device disclosed in US 6,135,120. This device comprises feeding means for feeding the tobacco material into pockets formed in a rotary portioning wheel for portioning the material into portions, at least one compression means for compressing the tobacco material portions, a unit for advancing a packaging material, such as a nonwoven web, in synchrony with the compressed portions, at least one discharge means for discharging the portions from the pockets to the packaging material, and a forming unit for forming individual portion packages, i.e. pouched smokeless tobacco products, from the discharged portions and the packaging material. At the intended point of discharge of the portions of to the packaging material, the packaging material has the form of a tape, the compression means being arranged to compress the portions in a direction which differs from the discharging and the feeding directions. The compression is preferably effected in a direction perpendicular to the discharging and the feeding directions. The compression may be effected in the axial direction of the portioning wheel whereas the feeding and discharging may be effected in the radial direction of the wheel. This technique is herein referred to as the "NYPS" technique.

By the term "tobacco" as used herein is meant any part, e.g., leaves, stems, and stalks, of any member of the genus Nicotiana. The tobacco may be whole, shredded, threshed, cut, ground, cured, aged, fermented, or treated otherwise, e.g., granulated or encapsulated.

The term "tobacco material" is used herein for tobacco leaves or parts of leaves, such as lamina and stem. The leaves and parts of leaves may be finely divided (disintegrated), such as ground, cut, shredded or threshed, and the parts of leaves may be blended in defined proportions in the tobacco material.

"Oral" and "oral use" is in all contexts used herein as a description for use in the oral cavity of a human, such as buccal placement.

The term "oral pouched snuff products" as used herein includes oral pouched non-tobacco snuff products, which may be nicotine-containing or nicotine-free, as well as oral pouched tobacco snuff products, also called oral pouched smokeless tobacco products.

As used herein the terms "pouched snuff product for oral use" or "oral pouched snuff product" refer to a portion of smokeless tobacco or tobacco-free filling material, which may be nicotine-containing or nicotine free, packed in a saliva-permeable packaging material intended for oral use.

The packaging material is typically made of a nonwoven fleece (soft fabric) material, such as viscose (regenerated cellulose; viscose fibres are often referred to as viscose rayon or rayon), including an acrylic polymer that acts as binder in the nonwoven material and provides for heat-melt welding of the pouches during manufacturing thereof. The viscose nonwoven material normally used for pouched smokeless tobacco products is similar to the fabric used in tea bags. Nonwovens are fabrics that are neither woven nor knitted. Methods for the manufacturing of nonwoven materials are commonly known in the art.

Oral pouched smokeless tobacco products are normally sized and configured to fit comfortably and discreetly in a user's mouth between the upper or lower gum and the lip. In general, oral pouched smokeless tobacco products have a generally rectangular shape. Some typical shapes (length x width) of commercially available oral pouched smokeless tobacco products are, for instance, 35 mm x 20 mm, 34/35 mm x 14 mm, 33/34 mm x 18 mm, and 27/28 mm x 14 mm. Each oral pouched snuff products may have a maximum length within the range of from 25 to 35 mm along the longitudinal direction of the product and a maximum width within the range of from 12 to 20 mm along the transverse direction of the product. The thickness ("height") of the pouched product is normally within the range of from 2 to 8 mm. The total weight of commercially available oral pouched smokeless tobacco products are typically within the range from about 0.3 to about 3.5 g, such as from about 0.5 to 1.7 g, per pouched product.

Patent document US 8122893 B2 discloses a machine for manufacturing of pouches of a smokeless tobacco product. The machine comprises an intermittently rotatable dispensing disc with peripheral cavities, a station at which each cavity is filled with a given quantity of tobacco equivalent to a single portion, a push rod mechanism by which the portions of tobacco are ejected from each cavity of the disc at a transfer station, and a connecting duct through which the portion of tobacco ejected by the push rod from each cavity passes directly to a wrapping station where the pouches are formed, filled with the tobacco product and sealed. A rectilinear duct connects the transfer station with the wrapping station. The wrapping station comprises a tubular element positioned at the outlet end of the rectilinear duct, around which a tubular envelope of wrapping material is formed. The tubular envelope is sealed longitudinally by ultrasonic welders operating in close proximity to the tubular element. The machine also comprises sealing means located beneath the tubular element, of which the function is to bond the tubular envelope transversely in such a manner as to form a continuous succession of pouches, each containing a relative portion of tobacco. Downstream of the transverse sealing means, the machine comprises a pair of transport belts looped around respective pulleys positioned to take up and direct the continuous succession of pouches toward cutting means by which the succession of pouches is divided up into single units.

According to US 8122893 B2, the cutting means are separate from the sealing means and are located downstream of the sealing means. The pouches are transported by a pair of transport belts from the sealing means to the cutting means. Hence, cutting is performed as a step of its own, which step is separate from the step of welding.

Document WO 2015/107484 A1 relates to an ultrasound device for sealing and cutting material in sheets or strips to close containers, comprising a sonotrode for emitting mechanical vibrations having a first profile and a contact body having a second profile acting in conjunction with the first profile of the sonotrode to define a sealing and cutting region. The first profile of the sonotrode or the second profile of the contact body comprises a first face and a second face joined together in a shared cutting edge. The first face has a first angle of inclination relative to a plane in which it lies coincident with a portion of material in sheets or in strips passing in the sealing and cutting region. The second face has a second angle of inclination relative to the plane in which it lies. The first angle of the first face has a value different from the value of the second angle of the second face.

Document GB 2 248 796 A relates to a method and an apparatus for ultrasonic welding in pouch manufacturing. Pouch containers which are sealed by ultrasonic welding can be severed one from the other using the ultrasonic sealing unit to sever the film after sealing the film. This can be done by the energy director on the ultrasonic horn having sidewalls of a given angle and by increasing the pressure of the ultrasonic horn against the anvil.

Document US 2013/228288 A1 relates to an apparatus for cutting a packaging material for a package. The apparatus comprises an ultrasonic welding device that includes a sonotrode and an anvil for sealing the packaging material. The sonotrode is rotatable about a first axis of rotation and the anvil is rotatable about a second axis of rotation. The apparatus further comprises a cutting device which includes at least one knife for cutting the packaging material and which is arranged within the anvil. The knife has a blade with a cutting edge that includes at least two tips and at least two curved sections interconnecting the two tips.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

The present invention relates to a sealing device for sealing a packaging material enclosing a filling material to provide portion-packed oral pouched snuff products. The sealing device comprises an anvil with a first operation surface and a sonotrode with a second operation surface. The anvil and the sonotrode are arranged to allow passage of the packaging material therebetween. The second operation surface is located opposite the first operation surface during operation of the sealing device. The first and second operation surfaces are arranged to weld a first portion of the packaging material to a second portion of the packaging material. At least one of the first or second operation surfaces comprises a first welding surface defining a first extension plane and a second welding surface defining a second extension plane, which has a different orientation than the first extension plane. The first and second welding surfaces are partly delimited by a cutting edge having an extension direction along the first and second welding surfaces, such that the cutting edge separates the first welding surface from the second welding surface.

The packaging material may first be sealed and thereafter the filling material may be filled into the sealed packaging material, which then encloses the filling material. Purely as an example, the packaging material may be arranged to form a tubular web, which is sealed in a longitudinal direction and thereafter the filling material is placed in the sealed tubular web of the packaging material.

Alternatively, the filling material may first be enclosed by the packing material and then the sealing may be performed. Purely as an example, the filling material may be placed on a planar web of the packaging material, which is folded around the filling material to enclose it and thereafter the packaging material is sealed.

The first and second operation surfaces are configured for simultaneous welding and cutting of the packaging material. The first and second welding surfaces provide the welding, and the cutting edge provides the cutting. Hence, cutting is not performed by a knife or a blade, which may be separate or integrated in the anvil and/or the sonotrode. With the sealing device as described herein, the cut is placed in the welded area, such that a cut may be provided having no interspace to the welded portions of the packaging material, i.e. there are no non-welded portions adjacent to the cut. In other words, the seal will be coterminous with the cut edge of the packaging material. The cutting and welding is thereby made simultaneously in time, in the same operation step and next to each other. This results in that seals having a very narrow width and yet being reliable may be provided utilizing the sealing device as described herein. The seal may have a width equal to or less than 2 mm, such as within the range of from 0.1 mm to 2 mm or 0.1 mm to 1 mm or 0.1 to 0.5 mm. Such narrow seals look aesthetically appealing. Further, the narrow seal may contribute to a sense of comfort when the portion-packed oral pouched snuff product is in use.

Purely as an example, the cut may be placed in the central region of the welded portions, e.g. at or adjacent to the centre of the welded portions. The central region may comprise the centre +/- 40% of the total width of the welded portions, preferably the centre +/- 30% of the total width of the welded portions and more preferably the centre +/- 20% of the total width of the welded portions.

In case the packaging material forms a tubular web, the sealing device may be utilized to provide a longitudinal seal or to provide a transverse seal. The longitudinal seal is substantially parallel to a direction of travel of the tubular web and the transverse seal is substantially perpendicular to the direction of travel of the tubular web. Commonly, the packaging material of the tubular web is first longitudinally sealed and then transversely sealed. In case of forming a tubular web, the portion-packed oral pouched snuff product may have a general square or rectangular shape when seen from above.

The portion-packed oral pouched snuff product may be a smokeless tobacco product or non-tobacco snuff product. As mentioned above, the filling material may comprise a smokeless tobacco or tobacco-free material, which may be nicotine-containing or nicotine free. The filling material may also be referred to as filling composition or snuff composition.

The sonotrode may also be called an ultrasonic horn. It is adapted for transmitting ultrasonic energy. It provides ultrasonic vibrations and applies the vibrational energy to the packaging material to provide energy for the sealing. Ultrasounds have frequencies higher than the upper audible limit of a human, which is about 20 kHz for a young adult, kHz standing for kilohertz. The frequency used for the sonotrode in the sealing device as described herein may be in the range of from 20 kHz to 45 kHz, e.g. 20 kHz, 35 kHz or 40 kHz. The effect may be in the range of from 100 Watt to 300 Watt. The frequency and the effect are suitably adapted to the material to be welded, and may thus vary e.g. between different packaging materials.

The characteristics of the cut and weld performed by the sealing device as described herein depend on characteristics of the sealing device and of the packaging material and on their interaction. Examples of device characteristics are angles of the operation surfaces relative to each other, distance between the operation surfaces, material properties of the anvil and the sonotrode, frequency and energy of the ultra sound of the sonotrode. Examples of packaging material characteristics are type of material, melting point, thickness, surface roughness. Examples of interaction characteristics are gap width in relation to thickness of packaging material and pressure used by the anvil and the sonotrode during cutting and welding.

In the sealing device as described herein, the anvil may comprise the first and second welding surfaces as well as the cutting edge. In that case, the sonotrode may have a flat operation surface, which has a planar extension that is parallel to the direction of travel of the packaging material. Alternatively the sonotrode may comprise the welding surfaces and the cutting edge. In that case, the anvil may have a flat operation surface. As yet an alternative, both the anvil and the sonotrode may comprise welding surfaces and cutting edges, which cutting edges in that case preferably are located opposite to each other.

The anvil and the sonotrode form a gap during operation of the sealing device, since the second operation surface is located opposite to the first operation surface. The packaging material passes in the gap. The first and second operation surfaces may be arranged such that they are non-parallel or parallel in the gap.

In the seal, a first portion of the packaging material is welded to a second portion of the packaging material. In general, the packaging material comprises a first surface adapted to face the filling material and a second opposite surface adapted to face away from the filling material. In the seal, a first surface of the first portion of the packaging material may be welded to a first surface of the second portion of the packaging material, e.g. in order to form a fin seal. As an alternative, a first surface of the first portion of the packaging material may be welded to a second surface of the second portion of the packaging material or a second surface of the first portion of the packaging material may be welded to a first surface of the second portion of the packaging material, e.g. in order to form a lap seal.

The first welding surface and/or the second welding surface may comprise or be constituted by a planar surface, the planar surface being delimited at one side by the cutting edge.

The first welding surface defines a first extension plane. The first welding surface may comprise or be constituted by an inclined planar surface, such that the first extension plane is defined by the inclined planar surface. In case the first welding surface does not form a planar surface, e.g. having a curved surface, the first extension plane is defined as a mean plane to the first welding surface, i.e. the plane having the least squared distance from the first welding surface to that plane.

The second welding surface defines a second extension plane. The second welding surface may comprise or be constituted by an inclined planar surface, such that the second extension plane is defined by the inclined planar surface. In case the second welding surface does not form a planar surface, e.g. having a curved surface, the second extension plane is defined as a mean plane to the second welding surface, i.e. the plane having the least squared distance from the second welding surface to that plane. As mentioned above, the orientation of the second extension plane differs from that of that the first extension plane.

The first welding surface may have a rectangular shape, such that the cutting edge defines one side of the rectangle. Correspondingly, the second welding surface may have a rectangular shape, such that the cutting edge defines one side of the rectangle. The rectangles may have equal or different sizes.

The first extension plane and/or the second extension plane may form an angle in the range from 70° to 90° in relation to a main direction of the anvil or sonotrode comprising the first and second welding surfaces. The main direction is perpendicular to an extension direction of the cutting edge. Preferably the angle is in the range from 72° to 89°, more preferably from 75° to 88°, most preferably from 80° to 85°. If the welding surface does not form a planar surface, the angle is defined by means of the above-mentioned mean plane.

An angle of 90° would correspond to a non-angled surface, i.e. being parallel to the direction of travel of the web. In case both the anvil and the sonotrode comprise welding surfaces and cutting edges, a non-angled surface of one of the anvil or sonotrode may be located opposite to an angled surface of the other of the anvil or sonotrode. As mentioned above, the cutting edges are preferably located opposite to each other.

The angles of the first and second welding surfaces may be of equal size but may have opposite orientation. However, also their sizes may differ.

The first and/or second welding surfaces may have a projected width, when projected to the plane of the direction of travel of the web, of between 0 and 5 mm, preferably between 0.1 and 4 mm, more preferably between 0.2 and 3 mm, most preferably between 0.3 and 2 mm. The projected width may be chosen considering the desired width of the seal. The two welding surfaces may have the same projected width. The sealing device as described herein makes it possible to provide narrow, yet reliable seals.

At least one of the sonotrode or anvil may comprise or be constituted by a disc, a peripheral surface of the disc comprising or constituting the above-mentioned first and second operation surfaces. The disc is preferably rotatable, e.g. making it possible that its circumference moves with the same speed as the packaging material to be welded. Preferably, at least the one of the anvil or the sonotrode with the welding surfaces comprises or is constituted by a disc. More preferably, each of the sonotrode and the anvil comprises or is constituted by a disc. Such embodiments may be suitable for making a longitudinal seam or for making a transverse seal.

The first welding surface, the second welding surface and the cutting edge may extend along a circumference of the disc. If extending along the whole circumference of the disc, the disc would be suitable for making a longitudinal seal. The direction of travel of the packaging material would then be parallel to the extension direction of the cutting edge. In that case, parts of the packaging material being outside the cut, which parts are to be removed e.g. as edge strips, are joined to each other. The combined strip will be stronger than the individual strips and will thus better withstand a pulling force, such that it is less likely to be torn off.

If the cutting edge extends along a circumference of the disc, the use of a single welding surface would be feasible, which welding surface is partly delimited by the cutting edge, e.g. at one side, if the welding surface is rectangular. The welding surface defines an extension plane, which may form an angle in the ranges mentioned above. This may be the case when the cutting edge is used to cut away edge strips, since then it would be feasible to only weld the packaging material inside of the cut, i.e. in the portion-packed oral pouched snuff product. Thereby the cut away strips would be removed separately.

If the first welding surface, the second welding surface and the cutting edge extend in a direction parallel to a rotation axis of the disc, i.e. perpendicular to the circumferential direction, the disc would be suitable for making a transverse seal.

At least one of the sonotrode or the anvil may adapted to be displaced in a reciprocating way in relation to the other of the sonotrode or the anvil, preferably each of the sonotrode and the anvil being adapted to be displaced in opposite reciprocating directions. This may be utilized when making a transverse seal.

The at least one of the sonotrode and the anvil may further be adapted to be displaced together with the packaging material in a direction perpendicular to the extension direction of the cutting edge, while performing simultaneous cutting and welding. Preferably each of the sonotrode and the anvil is adapted to be displaced together with the packaging material in a direction perpendicular to the extension direction of the cutting edge, while performing the simultaneous cutting and welding. The at least one of the sonotrode and the anvil then moves in the direction of travel together with the web. This may be utilized when making a transverse seal.

The present invention further relates to an arrangement for manufacturing of portion-packed oral pouched snuff products.

The arrangement comprises at least one first feeding unit for supplying an advancing web of packaging material, a second feeding unit for supplying a filling material, an enclosing unit for arranging the web of packaging material to enclose the filling material and at least one sealing device as described herein arranged for sealing the packaging material, thereby making at least one seal of the portion-packed oral pouched snuff products. The enclosing unit is located before or after the second feeding unit, either directly before or after, or with other units in between.

The enclosing unit may constitute or comprise a forming unit for forming a tubular web of packaging material. In that case, the arrangement may comprise a first feeding unit for supplying an advancing web of packaging material, a second feeding unit for supplying a filling material to the advancing web, a forming unit for forming the tubular web of packaging material and at least one sealing device as described herein arranged for sealing the packaging material, thereby making at least one seal of the portion-packed oral pouched snuff products. The forming unit is located before or after the second feeding unit, either directly before or after, or with other units in between.

If the forming unit is located after the second feeding unit, the filling material may be placed on a planar web of the packaging material, which is folded around the filling material to form a tubular web to enclose the filling material, which tubular web thereafter is sealed.

If the forming unit is located before the second feeding unit, the packaging material may first be formed to a tubular web, which is sealed and thereafter the filling material may be filled into the sealed tubular web.

The arrangement may comprise an additional feeding unit for supplying an additional advancing web of packaging material, such that two webs of packaging material are supplied. In that case, the filling material may be placed on one of the webs and the other web may be placed on top of the filling material, thereby also being on top of the other web. It may then be advantageous to form two longitudinal seals, wherein each of them may be provided by a sealing device as described herein. The two longitudinal seals will be located at opposite lateral sides of the pouched product when seen from above.

The arrangement may comprise a first sealing device as described herein for providing the portion-packed oral pouched snuff products with a longitudinal seal, and/or a second sealing device as described herein for providing the portion-packed oral pouched snuff products with a transverse seal. The arrangement may also comprise a sealing device according to known technology, e.g. utilizing heat-melt welding, and having a separate cutting means.

The arrangement may comprise a pulling unit located downstream of the at least one sealing device as described herein, preferably at a distance substantially from the sealing device corresponding to an extension of one of the portion-packed oral pouched snuff products in a direction perpendicular to the extension direction of the cutting edge of the sealing device, i.e. along the direction of travel. This distance may be in the range of from 15 mm to 50 mm, preferably in the range of from 25 mm to 40 mm.

The pulling unit may comprise a nip between a pair of rollers arranged to pull the pouched product in the direction of travel. Thereby the web is tensioned in a controllable way in order to make a separation of the pouched product from the following pouched product easier. The distance between the nip and the cutting edge roughly corresponds to the extension of the pouched product in the direction of travel. Hence, if the arrangement is utilized for manufacturing portion-packed oral pouched snuff products of different sizes, the distance is preferably adjustable.

The present invention also relates to a method for portion-packing of an oral pouched snuff product. The method comprises
a) supplying and advancing a web of packaging material, the web of packaging material advancing in a direction of travel,
b) supplying a filling material to the advancing web of packaging material,
c) arranging the advancing web of packaging material to enclose the filling material, the arranging being performed before or after supplying the filling material,
d) passing the web in a gap formed by a sonotrode and an anvil,
wherein the method further comprises simultaneously welding and cutting the web of packaging material, the cutting being performed such that a cut is located in a welded area.

The advancing web of packaging material may be arranged to a tubular web to enclose the filling material.

If step b) is performed before step c), a portion of the filling material may be placed on the web of packaging material being in a planar state. Thereafter the web may be arranged to enclose the portion of the filling material, i.e. performing step c). As an alternative, an additional web may be placed on top of the filling material and thereby also on top of the web provided in step a).

If step c) is performed before step b), a portion of the filling material may be filled into an already formed tubular web. In that case, step b) is preferably performed after step after step d) as well, such that the tubular web is already longitudinally sealed when the filling material is filled.

The welding and cutting may be performed by a sealing device as described herein.

The simultaneous cutting and welding may be performed along, or substantially along, a direction of travel of the web of packaging material, thereby forming a longitudinal seal.

The simultaneous cutting and welding may be performed along, or substantially along, a direction being perpendicular to the direction of travel of the web of packaging material thereby forming a transverse seal.

Step d) may be performed two, three or more times, e.g. once for a longitudinal seal and once for a transverse seal. If two longitudinal seals are used, step d) may be performed once for each of them.

At least one of the sonotrode or the anvil may be displaced in a reciprocating way in relation to the other of the sonotrode or the anvil, preferably each of the sonotrode and the anvil being displaced in opposite reciprocating directions. This may be utilized when making a transverse seal.

The sonotrode and/or the anvil may be displaced in the direction of travel together with the web of packaging material while performing the welding and cutting, e.g. as described herein. This may be utilized when making a transverse seal.

The method may further comprise pulling the web at least in the direction of travel, the pulling being performed downstream of the welding and cutting, preferably at a distance from the welding and cutting corresponding to the extension of the portion-packed oral pouched snuff product in the direction of travel. The pulling may be performed by the pulling unit described herein, which may comprise a nip between a pair of rollers arranged to pull the pouched product in the direction of travel.

The sealing device, the arrangement and/or the method as described herein are suitable for high-speed portion-packing of oral pouched snuff products, such as production speeds providing at least 100 pouched products per minute, or at least 150 pouched products per minute, or at least 200 pouched products per minute.

The sealing device, the arrangement and/or the method as described herein may be utilized to provide an oral pouched snuff product comprising a filling material and a saliva-permeable pouch enclosing the filling material, the saliva-permeable pouch having a longitudinal direction and a transverse direction perpendicular to said longitudinal direction; the saliva-permeable pouch having at least one elongated seal having a seal length extending along said transverse direction of said product and a seal width extending along the longitudinal direction of the saliva-permeable pouch, wherein the seal width of said at least one elongated seal is equal to or less than 2 mm, such as within the range of from 0.1 mm to 2 mm or from 0.1 mm to 1 mm or from 0.1 mm to 0.5 mm, and the at least one elongated seal sealing an outermost end portion of the saliva-permeable pouch.

### BRIEF DESCRIPTION OF THE DRAWINGS

The present invention will hereinafter be further explained by means of non-limiting examples with reference to the appended drawings wherein:
- Fig. 1: illustrates a sealing device according to a first embodiment of the invention,
- Fig. 2: is a detailed cross-sectional view showing the sealing device in operation,
- Fig. 3a-g: illustrate an arrangement according to the invention for manufacturing of portion-packed oral pouched snuff products,
- Fig. 4: illustrates a cross-section through a nip of a pulling unit,
- Fig. 5: illustrates a sealing device according to a second embodiment of the invention and a sealing device according to a third embodiment of the invention,
- Fig. 6: is a detailed view of the anvil of the sealing device according to the second embodiment of the invention, and
- Fig. 7: is a detailed view of an alternative anvil.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

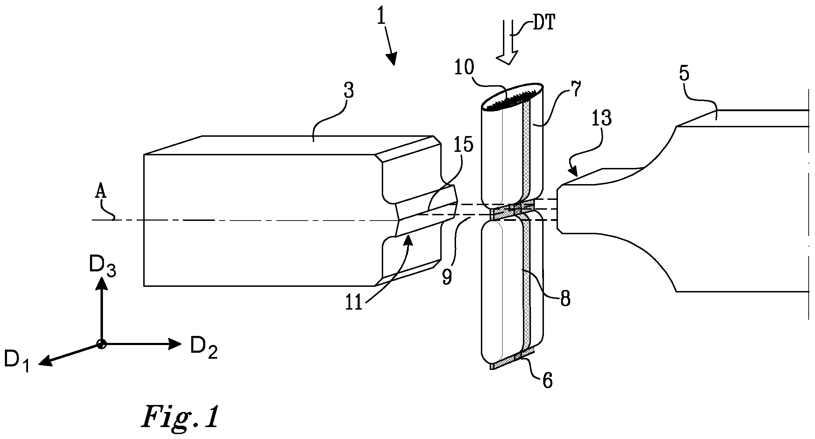

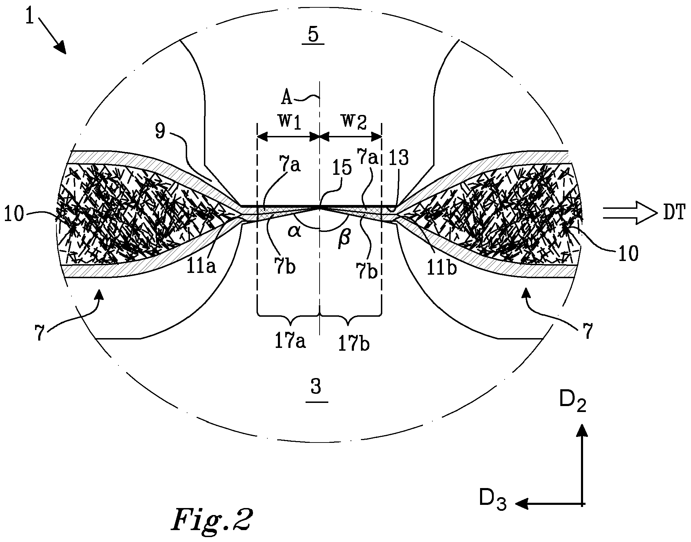

Figures 1 and 2 illustrate a sealing device 1 for sealing a packaging material enclosing a filling material to provide portion-packed oral pouched snuff products according to a first embodiment of the invention. Figure 1 is a perspective view. Figure 2 is a detailed cross-sectional view showing the sealing device 1 in operation.

The sealing device 1 comprises an anvil 3 and a sonotrode 5, which is arranged opposite to the anvil 3 to allow passage of the packaging material 7 in a gap 9 formed between the sonotrode 5 and the anvil 3. The sonotrode 5 is adapted for transmitting ultra-sonic energy. In the illustrated embodiment of Figure 1, a portion 10 of a filling material has already been enclosed by the packaging material 7 before reaching the sealing device 1. The filling material comprises a smokeless tobacco or tobacco-free material, which may be nicotine-containing or nicotine free. The filling material may also be referred to as filling composition or snuff composition. A portion-packed oral pouched snuff product comprises the portion 10 of the filling material and a piece of the packaging material 7, the packaging material 7 enclosing the portion 10 of the filling material.

The anvil 3 and the sonotrode 5 are configured for simultaneous welding and cutting of the packaging material 7. The welding operation is utilized to provide the pouched snuff product with one or more seals, which may be longitudinal seals and/or transverse seals. The cutting operation is utilized to cut the packaging material 7, e.g. to separate two consecutive pouched products from each other or to separate superfluous packaging material from a longitudinal seal.

The packaging material 7 is adapted to advance in a direction of travel DT through the gap 9. The orientation of the direction of travel DT in relation to the orientation of the sonotrode 5 and the anvil 3 depends on whether a longitudinal or transverse seal is to be formed. For a longitudinal seal, the direction of travel would be out of the paper in Figure 1. For providing a transverse seal 6, as is illustrated in Figure 1, the direction of travel DT is downwards in Figure 1.

The packaging material 7 is formed to a tubular web, which may comprise a longitudinal seal 8. At the desired location of the transverse seal 6, there is no filling material. Instead a first portion 7a of the packaging material 7 directly faces a second portion 7b of the packaging material 7. These two portions 7a, 7b are to be welded together in the transverse seal 6.

The anvil 3 comprises a first operation surface 11 and the sonotrode 5 comprises a second operation surface 13, which is located opposite to the first operation surface 11. The first operation surface 11 of the anvil 3 comprises a first welding surface 11a and a second welding surface 11b. A cutting edge 15 delimits the first welding surface 11a and the second welding surface 11 b from each other. The cutting edge 15 is located at a portion of the first operation surface 11 being adjacent to the narrowest portion of the gap 9. The cutting edge 15 is adapted to cut through the packaging material 7. In the illustrated embodiment, the cutting edge 15 is adapted to cut through the first and second portions 7a, 7b of the packing material 7. The second operation surface 13 is non-angled, i.e. flat. The direction of travel DT is substantially parallel to the non-angled operation surface 13 of the sonotrode 5.

The extension direction of the cutting edge 15 defines a first direction D₁ of the anvil 3. A main direction A of the anvil 3 defines a second direction D₂, which is perpendicular to the first direction D₁. A third direction D₃ is perpendicular to both the first direction D₁ and to the second direction D₂. Since Figures 1 and 2 illustrates providing the transverse seal 6, the first direction D₁ substantially coincides with a transverse direction of the packing material 7 and the third direction D₃ coincides with the direction of travel DT of packaging material 7 but pointing in the opposite direction.

The first welding surface 11a defines a first extension plane. In the illustrated embodiment, the first welding surface 11a constitutes an inclined planar surface, such that the first extension plane is defined by the inclined planar surface. In case, the first welding surface 11a does not form a planar surface, e.g. by having a curved surface, the first extension plane is defined as a mean plane to the first welding surface 11a, i.e. the plane having the least squared distance from the first welding surface 11a to that plane.

The first extension plane assumes an angle α being between 70° and 90° in relation to the main direction A of the anvil 3, being parallel to the second direction D₂, preferably the angle α being in the range from 72° to 89°, more preferably from 75° to 88°, most preferably from 80° to 85°. In the illustrated embodiment, the angle α is substantially 82°.

The second welding surface 11b defines a second extension plane. In the illustrated embodiment, the second welding surface 11b constitutes an inclined planar surface, such that the second extension plane is defined by the inclined planar surface. The orientation of the second extension plane differs from that of that the first extension plane. The second extension plane assumes an angle β being between 70° and 90° in relation to the main direction A of the anvil 3, preferably the angle β being in the range from 72° to 89°, more preferably from 75° to 88°, most preferably from 80° to 85°. In the illustrated embodiment, the angle β is substantially 82°. Hence, the angles α, β of the first and second welding surfaces 11a, 11b are of equal size but different orientation in the illustrated embodiments of Figures 1 and 2. However, also their sizes may differ.

As mentioned above, the second operation surface 13 is non-angled. It thus assumes an angle of 90° in relation to the second direction D₂.

The cutting edge 15 delimits one side of the first welding surface 11a and the corresponding side of the second welding surface 11b. When viewed along the main direction A, the first welding surface 11a and the second welding surface 11b form a rectangular region. One side of the rectangles is delimited by the cutting edge 15. The cutting edge 15 thus separates the first welding surface 11a from the second welding surface 11b. Yet the two welding surfaces 11a, 11b extend all the way to the cutting edge 15, such that there is no interspace between the weld and the cut, i.e. there are no non-welded portions adjacent to the cut.

The first welding surface 11a comprises a first welding zone 17a delimited at one side by the cutting edge 15, and the second welding surface 11b comprises a second welding zone 17b also delimited at one side by the cutting edge 15. In the first and second welding zones 17a, 17b, the anvil 3 and the sonotrode 5 are close enough to be able to melt the first and second portions 7a, 7b of the packaging material and thereby join them by welding. The widths w₁, w₂ of the first and second welding zones 17a, 17b in the third direction D₃ depend on characteristics of the sealing device 1, the packaging material 7 and their interaction. Examples of device characteristics are angles of the operation surfaces 11, 13 relative to each other, distance between the operation surfaces 11, 13, material properties of the anvil 3 and the sonotrode 5, frequency and energy of the ultra sound of the sonotrode 5. Examples of packaging material characteristics are type of material, melting point, thickness, surface roughness. Examples of interaction characteristics are gap width in relation to thickness of packaging material and pressure used by the anvil 3 and the sonotrode 5 during cutting and welding.

In the illustrated embodiment the first and second welding zones 17a, 17b have the same widths w₁, w₂, but the widths w₁, w₂ may also differ. Further, the width w₁ of the first welding zone 17a may be the same as for the first operation surface 11 and/or the width w₂ of the second welding zone 17b may be the same as for the second operation surface 13. However, typically the welding zone is narrower than the operation surface, i.e. the width of the weld is less than the width of the gap 9 as seen along the direction of travel DT.

In the sealing device as described herein, the packaging material 7 is welded on both sides of the cutting edge 15. This configuration could suitably be used for a transverse seal 6, as is illustrated in Figures 1 and 2, wherein the cut performed by the cutting edge 15 is utilized to separate individual pouched products and for which there is a desire that both ends of the individual pouched products should be adequately sealed. The direction of travel DT would thus be parallel to the non-angled second operation surface 13 but substantially perpendicular to the extension direction of the cutting edge 15, see Figures 1 and 2. For such a transverse seal 6, it may be advantageous that the angles α, β of the extension planes are of the same sizes and the first and second welding zones 17a, 17b have the same widths w₁, w₂.

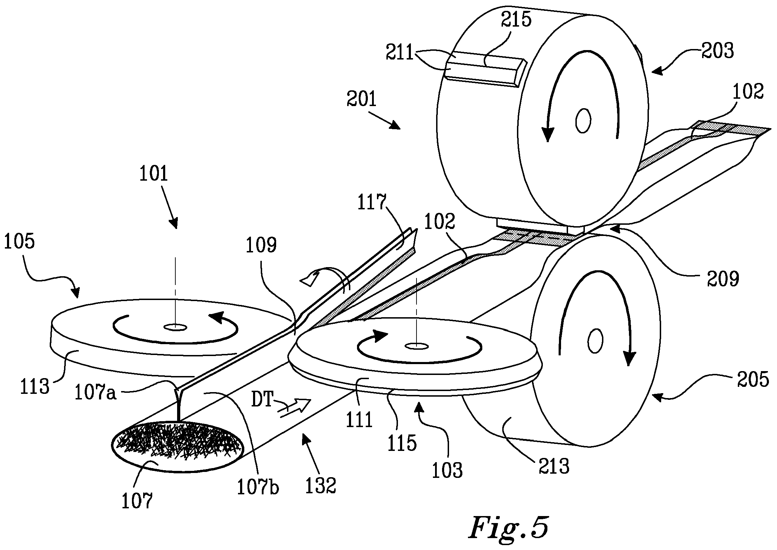

A sealing device like the one illustrated in Figures 1 and 2 would also be suitable for making a longitudinal seal. The direction of travel would then be in the first direction D₁, i.e. parallel to the extension direction of the cutting edge 15, i.e. out of the paper in Figure 2. In that case, parts of the packaging material 7 being outside the cut, which parts are to be removed e.g. as strips, are joined to each other. The combined strip will be stronger than the individual strips and will thus better withstand a pulling force, such that it is less likely to be torn off. Details of making a longitudinal seal are provided below in conjunction with Figures 5-7.

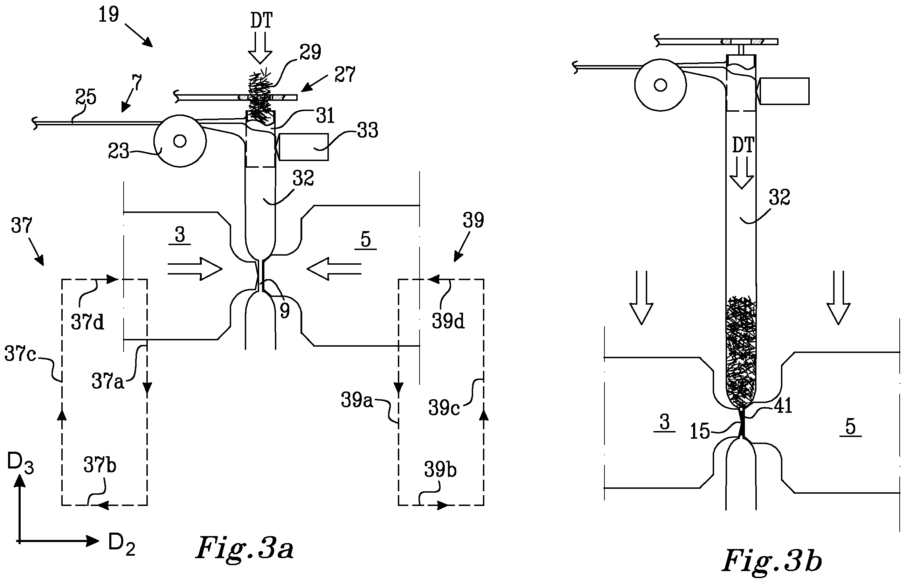

Figures 3a-g illustrate an arrangement 19 according to the invention for manufacturing of portion-packed oral pouched snuff products 43. The arrangement 19 comprises a first feeding unit 23 for supplying a planar web 25 of the packaging material 7, a second feeding unit 27 for supplying a filling material 29 to the advancing web 25, a forming unit 31 for forming a tubular web 32 of the planar web 25 of the packaging material 7, a device 33 for making a longitudinal seal and a device for making a transverse seal, illustrated as the sealing device 1 of Figures 1 and 2.

The second feeding unit 27 may be located downstream or upstream of the forming unit 31. If placed downstream, the web 25 is first formed to a tubular web 32 and thereafter the filling material 29 is placed in the tubular web 32 as a portion 10, as for the arrangement 19 illustrated in Figures 3a-g. Alternatively, the filling material 29 may be placed on the planar web 25 as a portion 10 before the planar web 25 is formed to a tubular web, such that the packaging material 7 is arranged around the snuff portion to form the tubular web, thereby enclosing the snuff portion 10.

At least one of the devices for making a longitudinal seal and the device for making a transverse seam may utilize ultra-sound to perform simultaneous welding and cutting, e.g. by the sealing device as described in conjunction with Figures 1-2, in order to obtain a seal. Hence, in the arrangement 19 according to the invention, welding and cutting is performed simultaneously and in the same operation step for at least one of the seals.

In the illustrated embodiment of Figures 3a-g, the transverse seal 6 is formed by a device like the one described in conjunction with Figures 1 and 2. The transverse seal 6 may have a width equal to or less than 2 mm, such as within the range of from 0.1 mm to 2 mm or 0.1 mm to 1 mm or 0.1 to 0.5 mm, although the width is exaggerated in Figures 3a-g in order to better illustrate what happens in the gap 9 between the anvil 3 and the sonotrode 5 during welding and cutting.

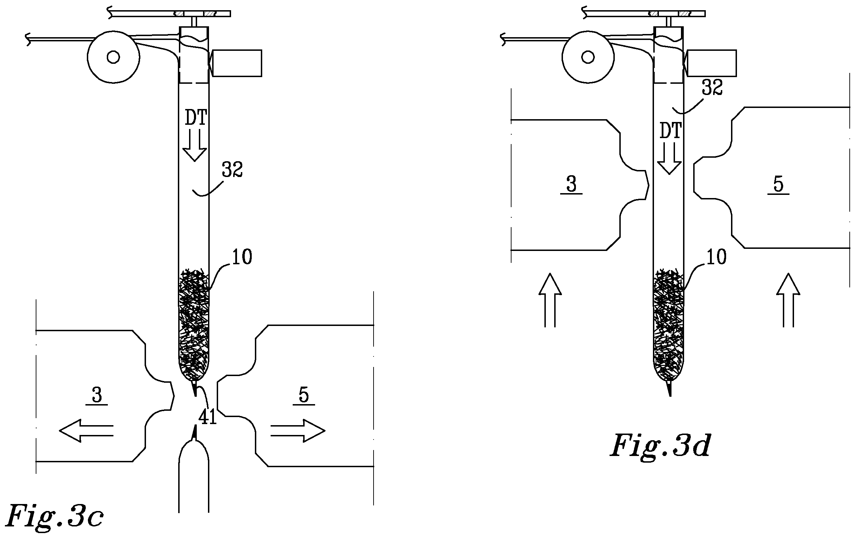

The sonotrode 5 and the anvil 3 are arranged to be displaced in a reciprocating way in relation to the tubular web 32 in the second direction D₂, between a first position, illustrated in Figure 3a, being in contact with the tubular web 32 and a position, illustrated in Figure 3c, being out of contact with the tubular web 32.

Further, the sonotrode 5 and the anvil 3 are adapted to follow the tubular web 32 when moving in the direction of travel DT, i.e. in a direction opposite to the third direction D₃, while performing the simultaneous welding and cutting, in order to be able to follow the tubular web 32 to a downstream position, illustrated in Figure 3b.

The anvil 3 moves along a path 37 which has a first portion 37a parallel to and adjacent to the tubular web 32, a second portion 37b moving the anvil 3 away from the tubular web 32, a third portion 37c bringing the anvil 3 back upstream and a fourth portion 37d bringing the anvil 3 back into contact with the tubular web 32. The sonotrode 5 follows a corresponding path 39, having corresponding portions 39a, 39b, 39c, 39d. See paths 37, 39 illustrated in Figure 3a. The paths 37, 39 are further described below.

Figure 3a illustrates a start of the method. A longitudinal seal, e.g. like the longitudinal seal 8 illustrated in Figure 1, is continuously formed in the advancing tubular web 32 by the device 33 for making a longitudinal seal. The anvil 3 and the sonotrode 5 assume the first position, in which they start welding. A portion 10 of the filling material 29 is filled from above into the tubular web 32. The filling material moves downwards, e.g. by gravity, until it reaches the portion of the tubular web 32, which is in the gap 9 between the anvil 3 and the sonotrode 5.

The anvil 3 and the sonotrode 5 move downstream together with the tubular web 32 while performing the welding along the respective first portions 37a, 39a of their paths. The anvil 3 and the sonotrode 5 then reach a second position being downstream of the first position but yet in contact with the tubular web 32. See Figure 3b. The tubular web 32 is cut by the cutting edge 15 leaving a transverse seal 41.

Thereafter the anvil 3 and the sonotrode 5 are moved away from the tubular web 32 along the second portions 37b, 39b of their respective paths until they reach a respective third position, such that they are no longer in contact. The already formed transverse seal 41 prevents the portion 10 of the filling material from falling out. See Figure 3c.

As a next step, the anvil 3 and the sonotrode 5 are moved back upstream along the third portions 37c, 39c of their respective paths to a fourth position being out of contact with the tubular web 32. See Figure 3d.

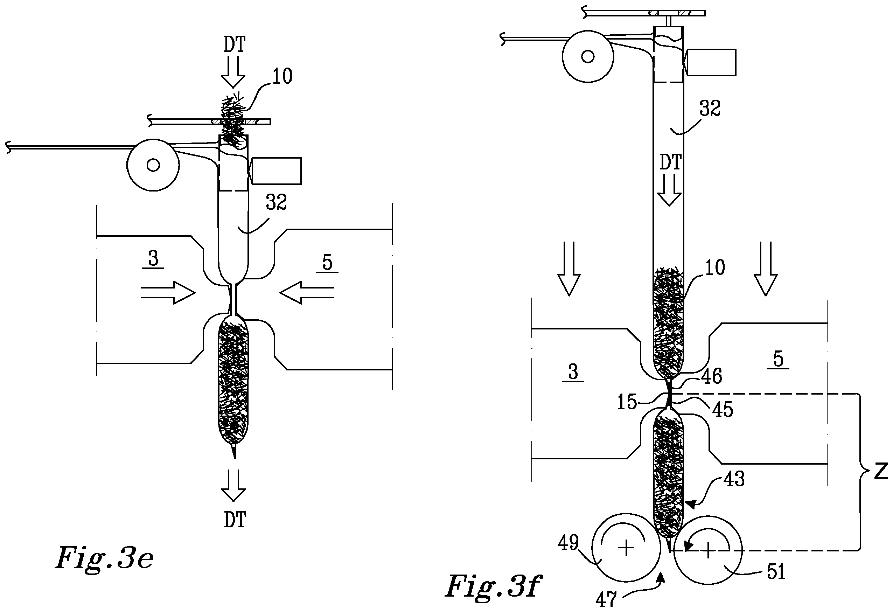

Then the anvil 3 and the sonotrode 5 are moved back to the first position along the fourth portions 37d, 39d of their respective paths, such that they start forming a new transverse seal. See Figure 3e.

The anvil 3 and the sonotrode 5 move along the respective first portions 37a, 39a of their paths together with the tubular web 32 while performing the welding until the anvil 3 and the sonotrode 5 reach the second position being downstream of the first position but yet in contact with the tubular web 32. See Figure 3f. The tubular web 32 is cut by the cutting edge 15, leaving a transverse seal 45 at the upper edge of the pouched product 43 and a corresponding transverse seal 46 at the lower edge of the next pouched product, which has been filled by a next portion 10 of the filling material.

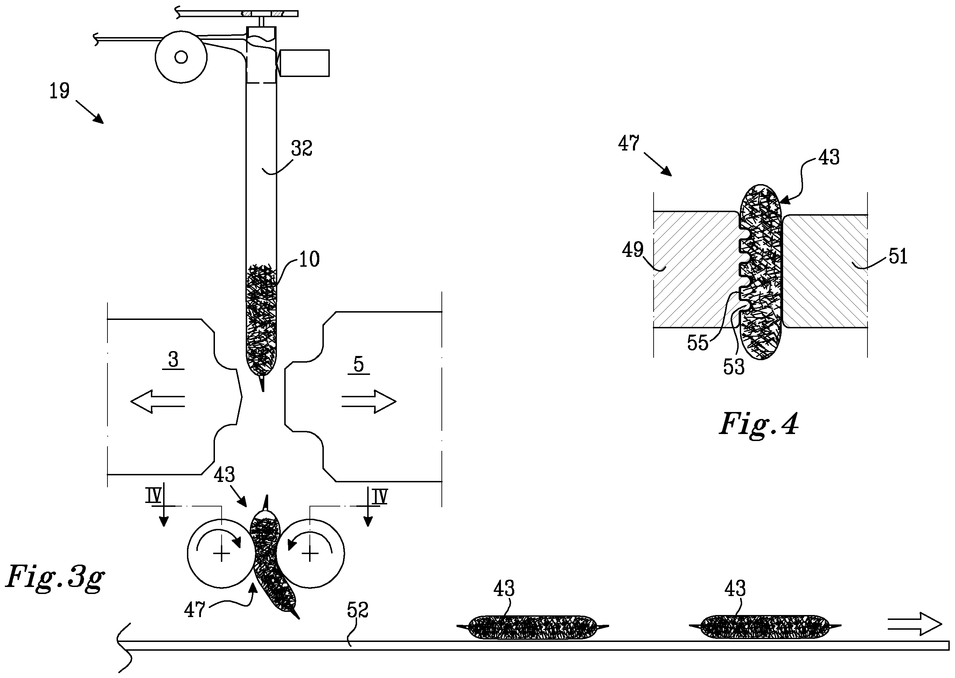

Thereafter the anvil 3 and the sonotrode 5 are moved away from the tubular web 32 along the second portions 37b, 39b of their respective paths until they reach a respective third position, illustrated in Figure 3g, such that they are no longer in contact, as is already described above for Figure 3c. The anvil 3 and the sonotrode 5 continue to move along their paths 37, 39 described above, while the tubular web 32 moves in the direction of travel DT.

In order to help separating the tubular web 32 in the cut, the arrangement 19 may further comprise a pulling unit, illustrated in Figure 3f and 3g as a nip 47 between a pair of rollers 49, 51 arranged to pull the pouched product 43 in the direction of travel DT. Thereby the tubular web 32 is tensioned in a controllable way in order to make a separation of the pouched product 43 from the next pouched product easier. The distance z between the nip 47 and the cutting edge 15 when the sealing device is in the second position, see Figure 3f, roughly corresponds to the extension of the pouched product 43 in the direction of travel DT. Hence, if the arrangement 19 is utilized for manufacturing portion-packed oral pouched snuff products of different sizes, the distance z is preferably adjustable. After passing the nip 47, the pouched product 43 is placed on a conveyer 52. See Figure 3g.

Figure 4 illustrates a cross-section through the nip 47 as seen from above in Figure 3g. In order to be able to pull the pouched product 43 filled with the portion 10 of the filling material without destroying the pouched product 43 in the nip 47, at least one of the rolls, illustrated as the left-hand roll 49, is provided with a plurality of ridges 53, having interspaces 55 between the ridges 53. The ridges 53 will help to pull the pouched product 43, while the interspaces 55 give room for the filling material. Thereby, it is possible to pull the pouched product 43 through the nip 47 without destroying it. There are at least two ridges 53. The other roll 51, may be flat as is illustrated, or it may also comprises ridges.

The longitudinal seal, e.g. like the longitudinal seal 8 illustrated in Figure 1, may be performed by heat-melt welding in the device 33 for making a longitudinal seal.

As an alternative to the arrangement 19 described above in conjunction with Figures 3a-g, pouched smokeless tobacco products may be produced by placing portions of moist snuff on a nonwoven web using a device disclosed in US 6,135,120, as mentioned above. This technique is herein referred to as the "NYPS" technique. According to the "NYPS" technique, the individual portion of smokeless tobacco composition is placed on the packaging material, which forms a tape. In order to enclose the portion of the smokeless tobacco composition, the packaging material is wrapped around the portion of the smokeless tobacco composition and sealed by a longitudinal seal. Both lateral edges of the packaging web may face in the same direction, e.g. upwards, such that a fin seal is made. Alternatively, the lateral edge portions of the packaging web may overlap, such that a lap seal is created. A combined fin and lap seal may be formed by letting the lateral edges of the packaging web face in the same direction forming a fin, optionally forming a fin seal in the fin, and then lap sealing the fin to the outer surface of the pouch.

Figure 5 illustrates a device 101 according to a second embodiment of the invention for making simultaneous welding and cutting for a longitudinal seal 102. Upstream of the device 101, a tubular web 132 is formed, e.g. by folding plates, not illustrated. The tubular web 132 may e.g. be formed as in the "NYPS" technique. In the embodiment illustrated in Figure 5, the anvil 103 comprises a rotary disc. Also the sonotrode 105 comprises a rotary disc. A gap 109 is formed between the sonotrode 105 and the anvil 103, through which two lateral edge portions 107a, 107b of the packaging material 107 pass. The first operation surface 111 of the anvil 103 comprises two welding surfaces 111a, 111b separated by a cutting edge 115. The welding surfaces 111a, 111b and the cutting edge 115 follow the perimeter of the disc-shaped anvil 103 in a circumferential direction. Preferably, they extend all the way around the circumference. The sonotrode 105 comprises a second operation surface 113.

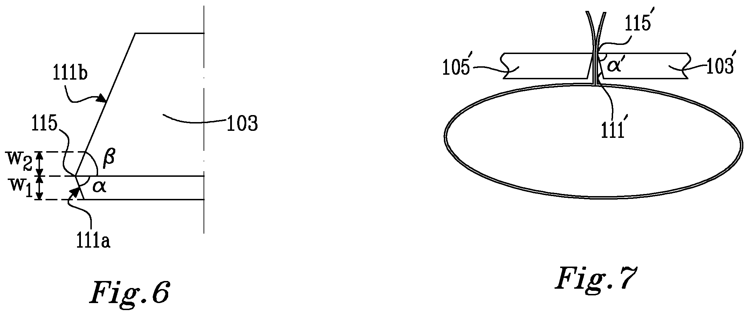

Figure 6 illustrates a detailed view of the anvil 103 as seen in cross-sectional view. The first welding surface 111a is delimited from the second welding surface 111b by the cutting edge 115. The details are corresponding to those already described in conjunction with Figure 2. The first welding surface 111a forms a first extension plane forming an angle α and the second welding surface 111b forms a second extension plane forming an angle β. The first welding surface 111a comprises a first welding zone having a width w₁ delimited at one side by the cutting edge 115, and the second welding surface 111b comprises a second welding zone having a width w₂ also delimited at one side by the cutting edge 115. In the first and second welding zones the anvil 3 and the sonotrode 5 are close enough to be able to melt the first and second portions 107a, 107b of the packaging material and thereby join them by welding.

In the longitudinal seal 102, the packaging material being outside of the cut is superfluous and may hence be removed. In the embodiment of Figure 5, the packing material 107 is welded on both sides of the cutting edge 115, i.e. both above and below the cut. This may be advantageous when removing the packaging material outside the cut. The superfluous packaging material may be removed as an edge strip 117. Since the edge strip 117 in the illustrated embodiment comprises cut-away material from both edge portions 107a, 107b welded together, the strength of the combined edge strip 117 is higher than would be the case, if the two edge strips were removed separately, i.e. not welded to each other.

However, it is also feasible to remove each edge strip separately. In that case, an anvil with a single welding surface would be feasible, e.g. like the one illustrated in Figure 7, wherein the anvil 103' comprising the welding surface 111' and the cutting edge 115' is located opposite to the sonotrode 105'. Both the anvil 103' and the sonotrode 105' comprise a rotary disc in a corresponding way to the second embodiment illustrated in Figure 5. The welding surface 111' and the cutting edge 115' extend in the circumferential direction along the peripheral surface of the anvil 103'.

Going back again to the embodiment of Figure 5, as a next step after forming the longitudinal seal 102, transverse seals are formed, e.g. by a sealing device 201 according to a third embodiment of the invention, also illustrated in Figure 5. The sonotrode 205 comprises a rotary disc. Also the anvil 203 comprises a rotary disc. A gap 209 is formed between the sonotrode 205 and the anvil 203, through which the tubular web 132 filled with portions 10 of the filling material passes. Since the seal is to be made in a transverse direction, the operation surface 211 of the anvil 203 is located at the perimeter of the anvil 203 extending in an axial direction of the rotary discs. The anvil 203 comprises one or more operation surfaces 211, in the illustrated embodiment three, which are evenly distributed in the circumferential direction, such that the distance between two cutting edges 215 correspond to the longitudinal extension of the pouched product. Correspondingly, the operation surface 213 of the sonotrode 205 is located at the perimeter of the sonotrode 205. The sonotrode may comprise one or more operation surfaces, similar to the one illustrated in Figure 2, which are evenly distributed in the circumferential direction, such that the distance between two operation surfaces correspond to the longitudinal extension of the pouched product. A cross-section through the gap 209 may then look like illustrated in Figure 2.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A sealing device (1, 101, 201) for sealing a packaging material (7, 107) enclosing a filling material (29) to provide portion-packed oral pouched snuff products (43), said sealing device (1, 101, 201) comprising an anvil (3, 103, 203) with a first operation surface (11, 111, 211) and a sonotrode (5, 105, 205) with a second operation surface (13, 113, 213),
said anvil (3, 103, 203) and sonotrode (5, 105, 205) being arranged to allow passage of said packaging material (7, 107) therebetween,
said second operation surface (13, 113, 213) being located opposite said first operation surface (11, 111, 211) during operation of said sealing device (1, 101, 201),
said first (11, 111, 211) and second operation surfaces (13, 113, 213) being arranged to weld a first portion (7a, 107a) of said packaging material (7, 107) to a second portion (7b, 107b) of said packaging material (7, 107),
**characterized in that**
at least one of said first or second operation surfaces (11, 111, 211; 13, 113) comprises a first welding surface (11a, 111a) defining a first extension plane and a second welding surface (11b, 111b) defining a second extension plane, which has a different orientation than said first extension plane (11a, 111a),
said first and second welding surfaces (11a, 111a; 11b, 111b) being partly delimited by a cutting edge (15, 115, 215) having an extension direction along said first and second welding surfaces (11a, 111a; 11b, 111b), such that said cutting edge (15, 115, 215) separates said first welding surface (11a, 111a) from said second welding surface (11b, 111b),
wherein said first and second operation surfaces (11, 111, 211; 13, 113) are configured for simultaneous welding and cutting of said packaging material (7, 107), and wherein said first and second welding surfaces (11a, 111a; 11b, 111b) are adapted to provide said welding, and said cutting edge (15, 115, 215) is adapted to provide said cutting, and
wherein said first extension plane and/or said second extension plane forms an angle (α, β) in the range from 72° to 90° in relation to a main direction (A) of said anvil (3, 103, 203) and/or sonotrode (5, 105, 205) comprising said first and second welding surfaces (11a, 111a; 11b, 111b), said main direction (A) being perpendicular to an extension direction of said cutting edge (15, 115, 215).

2. The sealing device (1, 101, 201) according to claim 1, wherein said first welding surface (11a, 111a) and/or said second welding surface (11b, 111b) comprises, or is constituted by, a planar surface, said planar surface being delimited at one side by said cutting edge (15, 115, 215).

3. The sealing device (1, 101, 201) according to any one of the preceding claims, wherein said angle (α, β) formed by said first extension plane and/or said second extension plane in relation to said main direction (A) of said anvil (3, 103, 203) and/or sonotrode (5, 105, 205) comprising said first and second welding surfaces (11a, 111a; 11b, 111b), said main direction (A) being perpendicular to an extension direction of said cutting edge (15, 115, 215), is in the range from 72° to 89°, more preferably from 75° to 88°, most preferably from 80° to 85°.

4. The sealing device (1, 101, 201) according to any one of the preceding claims, wherein the sizes of said angles (α, β) of said first and second welding surfaces (11a, 111a; 11b, 111b) are equal.

5. The sealing device (101, 201) according to any one of the preceding claims,
wherein at least one of said sonotrode (105, 205) or anvil (103, 203) comprises or is constituted by a disc, a peripheral surface of said disc comprising or constituting said first and second operation surfaces (111, 113; 211, 213),
preferably each of said sonotrode (5, 105, 205) and said anvil (3, 103, 203) comprises, or is constituted by a disc.

6. The sealing device (101) according to claim 5, wherein said first welding surface (111a), said second welding surface (111b) and said cutting edge (115) extend along a circumference of said disc, preferably along the whole circumference of said disc.

7. The sealing device (1) according to any one of claims 1-4, wherein at least one of said sonotrode (5) or said anvil (3) is adapted to be displaced in a reciprocating way in relation to the other of said sonotrode (5) or said anvil (3), preferably each of said sonotrode (5) and said anvil (3) being adapted to be displaced in opposite reciprocating directions.

8. The sealing device (1) according to claim 7, wherein said at least one of said sonotrode (5) and said anvil (3) further is adapted to be displaced together with said packaging material (7) in a direction perpendicular to said extension direction of said cutting edge (15) while performing simultaneous cutting and welding.

9. An arrangement (19) for manufacturing of portion-packed oral pouched snuff products (43), said arrangement (19) comprising
- a first feeding unit (23) for supplying an advancing web (25) of packaging material (7, 107),
- a second feeding unit (27) for supplying a filling material (29) to said advancing web (25),
- an enclosing unit (31) for arranging said web (25) of packaging material to enclose said filling material (29), said enclosing unit (31) being located before or after said second feeding unit (27),
- at least one sealing device (1, 101, 201) according to any one of claims 1-8 arranged for sealing said packaging material (7, 107), thereby making at least one seal (6, 41, 45, 46, 102) of said portion-packed oral pouched snuff products (43).

10. The arrangement (19) according to claim 9, wherein said enclosing unit (31) constitutes or comprises a forming unit for forming a tubular web (32, 132) of said packaging material (7, 107).

11. The arrangement (19) according to claim 9 or 10 comprising
- a first sealing device (1, 101) according to any one of the preceding claims for providing said portion-packed oral pouched snuff products (43) with a longitudinal seal (102), and/or
- a second sealing device (1, 201) according to any one of the preceding claims for providing said portion-packed oral pouched snuff products (43) with a transverse seal (6, 41, 45, 46).

12. The arrangement (19) according to claim 9, 10 or 11, wherein said arrangement (19) comprises a pulling unit (47) located downstream of said at least one sealing device (1, 101) according to any one of claims 1-9, preferably at a distance (z) from said sealing device (1, 101) substantially corresponding to an extension of one of said portion-packed oral pouched snuff products (43) in a direction perpendicular to said extension direction of said cutting edge (15) of said sealing device (1, 101).

13. A method for portion-packing of an oral pouched snuff product,
said method comprises
- supplying and advancing a web (25) of packaging material (7, 107), said web (25) of packaging material (7, 107) advancing in a direction of travel (DT),
- supplying a filling material (29) to said advancing web (25) of packaging material (7, 107),
- arranging said advancing web (25) of packaging material (7, 107) to enclose said filling material (29), said arranging being performed before or after supplying said filling material (29),
- passing said web (25, 32, 132) in a gap (9, 109) formed by a sonotrode (5, 105, 205) and an anvil (3, 103, 203) of a sealing device according to any one of claims 1-8,
**characterized in that**
the method further comprises
- simultaneously welding and cutting said web (25, 32, 132) of packaging material (7, 107) by means of said sealing device according to any one of claims 1-8, wherein said cutting is performed such that a cut is located in a welded area, said cut being placed in a central region of welded portions (7a, 7b; 107a, 107b) of said packaging material, wherein said central region comprises the centre +/- 40% of the total width of said welded portions (7a, 7b; 107a, 107b).

14. The method according to claim 13 wherein said advancing web (25) of packaging material (7, 107) is arranged to form to a tubular web (32, 132) to enclose said filling material (29).

15. The method according to claim 13 or 14 wherein said simultaneous cutting and welding is performed along, or substantially along, a direction of travel (DT) of said web (25, 32, 132) of packaging material (7, 107).

16. The method according to any one of claims 13, 14 or 15, wherein said simultaneous cutting and welding is performed along, or substantially along, a direction being perpendicular to said direction of travel (DT) of said web (25, 32, 132) of packaging material (7, 107).

17. The method according to any one of claims 13-16, wherein said sonotrode (5) and/or said anvil (3) is displaced in said direction of travel (DT) together with said web (25, 32) of packaging material (7) while performing said welding and cutting.

18. The method according to any one of claims 13-17 further comprising pulling said web (25, 32) at least in said direction of travel (DT), said pulling being performed downstream of said welding and cutting, preferably at a distance (z) from said welding and cutting corresponding to the extension of said portion-packed oral pouched snuff product (43) in said direction of travel (DT).

## Patentansprüche

1. Versiegelungsvorrichtung (1, 101, 201) zum Versiegeln eines Verpackungsmaterials (7, 107), das ein Füllmaterial (29) einschließt, um portionsweise verpackte, in Beutel verpackte orale Schnupftabakprodukte (43) bereitzustellen, wobei die Versiegelungsvorrichtung (1, 101, 201) einen Gegenhalter (3, 103, 203) mit einer ersten Betriebsfläche (11, 111, 211) und einer Sonotrode (5, 105, 205) mit einer zweiten Betriebsfläche (13, 113, 213) umfasst,
wobei der Gegenhalter (3, 103, 203) und die Sonotrode (5, 105, 205) angeordnet sind, um den Durchgang des Verpackungsmaterials (7, 107) zwischen diesen zu erlauben,
wobei sich die zweite Betriebsfläche (13, 113, 213) während dem Betrieb der Versiegelungsvorrichtung (1, 101, 201) gegenüber der ersten Betriebsfläche (11, 111, 211) befindet,
wobei die ersten (11, 111, 211) und zweiten Betriebsflächen (13, 113, 213) angeordnet sind, um einen ersten Abschnitt (7a, 107a) des Verpackungsmaterials (7, 107) an einen zweiten Abschnitt (7b, 107b) des Verpackungsmaterials (7, 107) zu schweißen,
**dadurch gekennzeichnet, dass**
wenigstens eine der ersten oder zweiten Betriebsflächen (11, 111, 211; 13, 113) eine erste Schweißungsfläche (11a, 111a), die eine erste Erstreckungsebene definiert, und eine zweite Schweißungsfläche (11b, 111b), die eine zweite Erstreckungsebene definiert, die eine unterschiedliche Orientierung als die erste Erstreckungsebene (11a, 111a) aufweist, umfasst,
die ersten und zweiten Schweißungsflächen (11a, 111a; 11b, 111b) teilweise durch eine Schneidkante (15, 115, 215), die eine Erstreckungsrichtung entlang der ersten und zweiten Schweißungsflächen (11a, 111a; 11b, 111b) aufweist, abgegrenzt sind, sodass die Schneidkante (15, 115, 215) die erste Schweißungsfläche (11a, 111a) von der zweiten Schweißungsfläche (11b, 111b) trennt,
wobei die ersten und zweiten Betriebsflächen (11, 111, 211; 13, 113) zum gleichzeitigen Schweißen und Schneiden des Verpackungsmaterials (7, 107) konfiguriert sind und wobei die ersten und zweiten Schweißungsflächen (11a, 111a; 11b, 111b) angepasst sind, um die Schweißung bereitzustellen, und die Schneidkante (15, 115, 215) angepasst ist, um das Schneiden bereitzustellen, und
wobei die erste Erstreckungsebene und/oder die zweite Erstreckungsebene einen Winkel (α, β) im Bereich von 72° bis 90° bezüglich einer Hauptrichtung (A) des Gegenhalters (3, 103, 203) und/oder der Sonotrode (5, 105, 205), welche die ersten und zweiten Schweißungsflächen (11a, 111a; 11b, 111b) umfasst, bildet, wobei die Hauptrichtung (A) senkrecht einer Erstreckungsrichtung der Schneidkante (15, 115, 215) verläuft.

2. Versiegelungsvorrichtung (1, 101, 201) nach Anspruch 1, wobei die erste Schweißungsfläche (11a, 111a) und/oder die zweite Schweißungsfläche (11b, 111b) eine ebene Oberfläche umfasst, oder aus dieser besteht, wobei die ebene Oberfläche an einer Seite durch die Schneidkante (15, 115, 215) abgegrenzt ist.

3. Versiegelungsvorrichtung (1, 101, 201) nach einem der vorstehenden Ansprüche, wobei der Winkel (α, β), der von der ersten Erstreckungsebene und/oder der zweiten Erstreckungsebene bezüglich der Hauptrichtung (A) des Gegenhalters (3, 103, 203) und/oder der Sonotrode (5, 105, 205), welche die ersten und zweiten Schweißungsflächen (11a, 111a; 11b, 111b) umfasst, gebildet ist, wobei die Hauptrichtung (A), die senkrecht einer Erstreckungsrichtung der Schneidkante (15, 115, 215) verläuft, im Bereich von 72° bis 89°, bevorzugter von 75° bis 88°, besonders bevorzugt von 80° bis 85° liegt.

4. Versiegelungsvorrichtung (1, 101, 201) nach einem der vorstehenden Ansprüche, wobei die Größen der Winkel (α, β) der ersten und zweiten Schweißungsflächen (11a, 111a; 11b, 111b) gleich sind.

5. Versiegelungsvorrichtung (101, 201) nach einem der vorstehenden Ansprüche, wobei wenigstens eines von der Sonotrode (105, 205) oder von dem Gegenhalter (103, 203) eine Scheibe umfasst oder aus dieser besteht, wobei eine Umfangsfläche der Scheibe die ersten und zweiten Betriebsflächen (111, 113; 211, 213) umfasst oder diese bildet,
wobei vorzugsweise jedes von der Sonotrode (5, 105, 205) und von dem Gegenhalter (3, 103, 203) eine Scheibe umfasst oder aus dieser besteht.

6. Versiegelungsvorrichtung (101) nach Anspruch 5, wobei sich die erste Schweißungsfläche (111a), die zweite Schweißungsfläche (111b) und die Schneidkante (115) entlang eines Umfangs der Scheibe erstrecken, vorzugsweise entlang des gesamten Umfangs der Scheibe.

7. Versiegelungsvorrichtung (1) nach einem der Ansprüche 1-4, wobei wenigstens eines von der Sonotrode (5) oder von dem Gegenhalter (3) angepasst ist, um auf wechselseitige Weise bezüglich des anderen von der Sonotrode (5) oder von dem Gegenhalter (3) versetzt zu werden, wobei vorzugsweise jedes von der Sonotrode (5) und von dem Gegenhalter (3) angepasst ist, um in entgegengesetzten, wechselseitigen Richtungen versetzt zu werden.

8. Versiegelungsvorrichtung (1) nach Anspruch 7, wobei das wenigstens eine von der Sonotrode (5) und von dem Gegenhalter (3) weiter angepasst ist, um zusammen mit dem Verpackungsmaterial (7) in eine Richtung versetzt zu werden, die während des Durchführens eines gleichzeitigen Schneidens und Schweißens senkrecht der Erstreckungsrichtung der Schneidkante (15) verläuft.

9. Anordnung (19) zum Herstellen von portionsweise verpackten, in Beutel verpackten oralen Schnupftabakprodukten (43), wobei die Anordnung (19) Folgendes umfasst
- eine erste Zuführungseinheit (23) zum Beliefern einer sich vorwärts bewegenden Bahn (25) von Verpackungsmaterial (7, 107),
- eine zweite Zuführungseinheit (27) zum Beliefern eines Füllmaterials (29) an die sich vorwärts bewegende Bahn (25),
- eine Verschließeinheit (31) zum Anordnen der Bahn (25) von Verpackungsmaterial, um das Füllmaterial (29) einzuschließen, wobei sich die Verschließeinheit (31) vor oder hinter der zweiten Zuführungseinheit (27) befindet,
- wenigstens eine Versiegelungsvorrichtung (1, 101, 201) nach einem der Ansprüche 1-8, die zum Versiegeln des Verpackungsmaterials (7, 107) angeordnet ist, wodurch wenigstens eine Versiegelung (6, 41, 45, 46, 102) der portionsweise verpackten, in Beutel verpackten oralen Schnupftabakprodukte (43) hergestellt wird.

10. Anordnung (19) nach Anspruch 9, wobei die Verschließeinheit (31) eine Formeinheit zum Formen einer schlauchförmigen Bahn (32, 132) des Verpackungsmaterials (7, 107) bildet oder diese umfasst.

11. Anordnung (19) nach Anspruch 9 oder 10, umfassend
- eine erste Versiegelungsvorrichtung (1, 101) nach einem der vorstehenden Ansprüche, um eine Längsversiegelung (102) an die portionsweise verpackten, in Beutel verpackten oralen Schnupftabakprodukte (43) bereitzustellen, und/oder
- eine zweite Versiegelungsvorrichtung (1, 201) nach einem der vorstehenden Ansprüche, um eine Querversiegelung (6, 41, 45, 46) an die portionsweise verpackten, in Beutel verpackten oralen Schnupftabakprodukte (43) bereitzustellen.

12. Anordnung (19) nach Anspruch 9, 10 oder 11, wobei die Anordnung (19) eine Abzieheinheit (47) umfasst, die stromabwärts der wenigstens eine Versiegelungseinheit (1, 101) nach einem der Ansprüche 1-9 angeordnet ist, vorzugsweise in einem Abstand (z) von der Versiegelungsvorrichtung (1, 101), der im Wesentlichen einer Erstreckung eines der portionsweise verpackten, in Beutel verpackten oralen Schnupftabakprodukte (43) in einer Richtung entspricht, die senkrecht der Erstreckungsrichtung der Schneidkante (15) der Versiegelungsvorrichtung (1, 101) verläuft.

13. Verfahren zum portionsweisen Verpacken eines in Beutel verpackten oralen Schnupftabakprodukts, wobei das Verfahren Folgendes umfasst
- Beliefern und Vorwärtsbewegen einer Bahn (25) von Verpackungsmaterial (7, 107), wobei sich die Bahn (25) von Verpackungsmaterial (7, 107) in einer Laufrichtung (DT) vorwärts bewegt,
- Beliefern eines Füllmaterials (29) an die sich vorwärts bewegende Bahn (25) von Verpackungsmaterial (7, 107),
- Anordnen der vorwärts bewegenden Bahn (25) von Verpackungsmaterial (7, 107), um das Füllmaterial (29) einzuschließen, wobei das Anordnen vor oder nach dem Beliefern des Füllmaterials (29) durchgeführt wird,
- Durchführen der Bahn (25, 32, 132) in einen Spalt (9, 109), der durch eine Sonotrode (5, 105, 205) und einen Gegenhalter (3, 103, 203) einer Versiegelungsvorrichtung nach einem der Ansprüche 1-8 gebildet ist,
**dadurch gekennzeichnet, dass**
das Verfahren weiter Folgendes umfasst
- gleichzeitiges Schweißen und Schneiden der Bahn (25, 32, 132) von Verpackungsmaterial (7, 107) mittels der Versiegelungsvorrichtung nach einem der Ansprüche 1-8,
wobei das Schneiden derart durchgeführt wird, dass sich ein Schnitt in einem geschweißten Bereich befindet, wobei der Schnitt in eine zentrale Region der geschweißten Abschnitte (7a, 7b; 107a, 107b) des Verpackungsmaterials platziert wird, wobei die zentrale Region die Mitte +/- 40 % der Gesamtbreite der geschweißten Abschnitte (7a, 7b; 107a, 107b) umfasst.

14. Verfahren nach Anspruch 13, wobei die sich vorwärts bewegende Bahn (25) von Verpackungsmaterial (7, 107) angeordnet ist, um eine schlauchförmige Bahn (32, 132) zu bilden, um das Füllmaterial (29) einzuschließen.

15. Verfahren nach Anspruch 13 oder 14, wobei das gleichzeitige Schneiden und Schweißen entlang, oder im Wesentlichen entlang einer Laufrichtung (DT) der Bahn (25, 32, 132) von Verpackungsmaterial (7, 107) durchgeführt wird.

16. Verfahren nach einem der Ansprüche 13, 14 oder 15, wobei das gleichzeitige Schneiden und Schweißen entlang, oder im Wesentlichen entlang einer Richtung durchgeführt wird, die senkrecht der Laufrichtung (DT) der Bahn (25, 32, 132) von Verpackungsmaterial (7, 107) verläuft.

17. Verfahren nach einem der Ansprüche 13-16, wobei die Sonotrode (5) und/oder der Gegenhalter (3) in der Laufrichtung (DT), zusammen mit der Bahn (25, 32) von Verpackungsmaterial (7), während dem Durchführen des Schweißens und Schneidens versetzt wird.

18. Verfahren nach einem der Ansprüche 13-17, weiter umfassend das Abziehen der Bahn (25, 32) wenigstens in der Laufrichtung (DT), wobei das Abziehen stromabwärts des Schweißens und Schneidens durchgeführt wird, vorzugsweise in einem Abstand (z) von dem Schweißen und Schneiden entsprechend der Erstreckung des portionsweise verpackten, in Beutel verpackten oralen Schnupftabakprodukts (43) in der Laufrichtung (DT).

## Revendications

1. Dispositif de scellement (1, 101, 201) pour sceller un matériau d'emballage (7, 107) enveloppant un matériau de remplissage (29) pour fournir des produits à priser oraux ensachés (43) en emballage individuel, ledit dispositif de scellement (1, 101, 201) comprenant une enclume (3, 103, 203) avec une première surface opérationnelle (11, 111,211) et une sonotrode (5, 105, 205) avec une deuxième surface opérationnelle (13, 113, 213),
lesdites enclume (3, 103, 203) et sonotrode (5, 105, 205) étant agencées pour permettre un passage dudit matériau d'emballage (7, 107) entre elles, ladite deuxième surface opérationnelle (13, 113, 213) se situant opposée à ladite première surface opérationnelle (11, 111, 211) pendant le fonctionnement dudit dispositif de scellement (1, 101, 201),
lesdites première (11, 111,211) et deuxième surfaces opérationnelles (13, 113, 213) étant agencées pour souder une première partie (7a, 107a) dudit matériau d'emballage (7, 107) à une deuxième partie (7b, 107b) dudit matériau d'emballage (7, 107),
**caractérisé en ce que**
au moins l'une desdites première ou deuxième surfaces opérationnelles (11, 111, 211; 13, 113) comprend une première surface de soudage (11a, 111a) définissant un premier plan d'extension et une deuxième surface de soudage (11b, 111b) définissant un deuxième plan d'extension, qui a une orientation différente dudit premier plan d'extension (11a, 111a), lesdites première et deuxième surfaces de soudage (11a, 111a ; 11b, 111b) étant partiellement délimitées par un bord de coupe (15, 115, 215) ayant une direction d'extension le long desdites première et deuxième surfaces de soudage (11a, 111a ; 11b, 111b), de telle sorte que ledit bord de coupe (15, 115, 215) sépare ladite première surface de soudage (11a, 111a) par rapport à ladite deuxième surface de soudage (11b, 111 b),
dans lequel lesdites première et deuxième surfaces opérationnelles (11, 111, 211 ; 13, 113) sont configurées pour des soudage et découpe simultanés dudit matériau d'emballage (7, 107), et dans lequel lesdites première et deuxième surfaces de soudage (11a, 111a ; 11b, 111b) sont conçues pour fournir ledit soudage, et ledit bord de coupe (15, 115, 215) est conçu pour fournir ladite découpe, et
dans lequel ledit premier plan d'extension et/ou ledit deuxième plan d'extension forment un angle (α, β) dans la plage allant de 72° à 90° par rapport à une direction principale (A) de ladite enclume (3, 103, 203) et/ou sonotrode (5, 105, 205) comprenant lesdites première et deuxième surfaces de soudage (11a, 111a ; 11b, 111b), ladite direction principale (A) étant perpendiculaire à une direction d'extension dudit bord de coupe (15, 115, 215).

2. Dispositif de scellement (1, 101, 201) selon la revendication 1, dans lequel ladite première surface de soudage (11a, 111a) et/ou ladite deuxième surface de soudage (11b, 111b) comprennent, ou sont constituées de, une surface plane, ladite surface plane étant délimitée au niveau d'un côté par ledit bord de coupe (15, 115, 215).

3. Dispositif de scellement (1, 101, 201) selon l'une quelconque des revendications précédentes, dans lequel ledit angle (α, β) formé par ledit premier plan d'extension et/ou ledit deuxième plan d'extension par rapport à ladite direction principale (A) de ladite enclume (3, 103, 203) et/ou sonotrode (5, 105, 205) comprenant lesdites première et deuxième surfaces de soudage (11a, 111a ; 11b, 111b), ladite direction principale (A) étant perpendiculaire à une direction d'extension dudit bord de coupe (15, 115, 215), est dans la plage allant de 72° à 89°, plus préférablement de 75° à 88°, le plus préférablement de 80° à 85°.

4. Dispositif de scellement (1, 101, 201) selon l'une quelconque des revendications précédentes, dans lequel les tailles desdits angles (α, β) desdites première et deuxième surfaces de soudage (11a, 111a ; 11b, 111b) sont égales.

5. Dispositif de scellement (101, 201) selon l'une quelconque des revendications précédentes, dans lequel au moins l'une parmi ladite sonotrode (105, 205) ou enclume (103, 203) comprend ou est constituée d'un disque, une surface périphérique dudit disque comprenant ou constituant lesdites première et deuxième surfaces opérationnelles (111, 113 ; 211, 213),
de préférence chacune parmi ladite sonotrode (5, 105, 205) et ladite enclume (3, 103, 203) comprend, ou est constituée d'un disque.

6. Dispositif de scellement (101) selon la revendication 5, dans lequel ladite première surface de soudage (111a), ladite deuxième surface de soudage (111b) et ledit bord de coupe (115) s'étendent le long d'une circonférence dudit disque, de préférence le long de la circonférence entière dudit disque.

7. Dispositif de scellement (1) selon l'une quelconque des revendications 1 à 4, dans lequel au moins l'une parmi ladite sonotrode (5) ou ladite enclume (3) est conçue pour être déplacée en va-et-vient par rapport à l'autre parmi ladite sonotrode (5) ou ladite enclume (3), de préférence chacune parmi ladite sonotrode (5) et ladite enclume (3) étant conçue pour être déplacée dans des directions de va-et-vient opposées.

8. Dispositif de scellement (1) selon la revendication 7, dans lequel ladite au moins une parmi ladite sonotrode (5) et ladite enclume (3) est en outre conçue pour être déplacée conjointement avec ledit matériau d'emballage (7) dans une direction perpendiculaire à ladite direction d'extension dudit bord de coupe (15) tout en exécutant une découpe et un soudage simultanés.

9. Agencement (19) pour la fabrication de produits à priser oraux ensachés (43) en emballage individuel, ledit agencement (19) comprenant
- une première unité d'alimentation (23) pour alimenter une bande qui avance (25) de matériau d'emballage (7, 107),
- une deuxième unité d'alimentation (27) pour alimenter un matériau de remplissage (29) à ladite bande qui avance (25),
- une unité d'enveloppement (31) pour agencer ladite bande (25) de matériau d'emballage pour envelopper ledit matériau de remplissage (29), ladite unité d'enveloppement (31) se situant avant ou après ladite deuxième unité d'alimentation (27),
- au moins un dispositif de scellement (1, 101, 201) selon l'une quelconque des revendications 1 à 8 agencé pour sceller ledit matériau d'emballage (7, 107), réalisant de ce fait au moins un joint (6, 41, 45, 46, 102) desdits produits à priser oraux ensachés (43) en emballage individuel.

10. Agencement (19) selon la revendication 9, dans lequel ladite unité d'enveloppement (31) constitue ou comprend une unité de formage pour former une bande tubulaire (32, 132) dudit matériau d'emballage (7, 107).

11. Agencement (19) selon la revendication 9 ou 10 comprenant
- un premier dispositif de scellement (1, 101) selon l'une quelconque des revendications précédentes pour fournir auxdits produits à priser oraux ensachés (43) en emballage individuel un joint longitudinal (102), et/ou
- un deuxième dispositif de scellement (1, 201) selon l'une quelconque des revendications précédentes pour fournir auxdits produits à priser oraux ensachés (43) en emballage individuel un joint transversal (6, 41, 45, 46).

12. Agencement (19) selon la revendication 9, 10 ou 11, dans lequel ledit agencement (19) comprend une unité de traction (47) située en aval dudit au moins un dispositif de scellement (1, 101) selon l'une quelconque des revendications 1 à 9, de préférence à une distance (z) dudit dispositif de scellement (1, 101) correspondant sensiblement à une extension de l'un desdits produits à priser oraux ensachés (43) en emballage individuel dans une direction perpendiculaire à ladite direction d'extension dudit bord de coupe (15) dudit dispositif de scellement (1, 101).

13. Procédé pour emballer individuellement un produit à priser oral ensaché, ledit procédé comprend
- l'alimentation et l'avancement d'une bande (25) de matériau d'emballage (7, 107), ladite bande (25) de matériau d'emballage (7, 107) avançant dans une direction de déplacement (DT),
- l'alimentation d'un matériau de remplissage (29) à ladite bande qui avance (25) de matériau d'emballage (7, 107),
- l'agencement de ladite bande qui avance (25) de matériau d'emballage (7, 107) pour envelopper ledit matériau de remplissage (29), ledit agencement étant mis en oeuvre avant ou après l'alimentation dudit matériau de remplissage (29),
- le passage de ladite bande (25, 32, 132) dans un espace (9, 109) formé par une sonotrode (5, 105, 205) et une enclume (3, 103, 203) d'un dispositif de scellement selon l'une quelconque des revendications 1 à 8,
**caractérisé en ce que**
le procédé comprend en outre
- le soudage et la découpe simultanés de ladite bande (25, 32, 132) de matériau d'emballage (7, 107) au moyen dudit dispositif de scellement selon l'une quelconque des revendications 1 à 8, dans lequel ladite découpe est mise en oeuvre de telle sorte qu'une découpe est située dans une zone de soudage, ladite découpe étant placée dans une région centrale de parties soudées (7a, 7b ; 107a, 107b) dudit matériau d'emballage, dans lequel ladite région centrale comprend le centre +/- 40 % de la largeur totale desdites parties soudées (7a, 7b ; 107a, 107b).

14. Procédé selon la revendication 13 dans lequel ladite bande qui avance (25) de matériau d'emballage (7, 107) est agencée pour former une bande tubulaire (32, 132) pour envelopper ledit matériau de remplissage (29).

15. Procédé selon la revendication 13 ou 14 dans lequel lesdits découpe et soudage simultanés sont mis en oeuvre le long, ou sensiblement le long, d'une direction de déplacement (DT) de ladite bande (25, 32, 132) de matériau d'emballage (7, 107).

16. Procédé selon l'une quelconque des revendications 13, 14 ou 15, dans lequel lesdits découpe et soudage simultanés sont mis en oeuvre le long, ou sensiblement le long, d'une direction étant perpendiculaire à ladite direction de déplacement (DT) de ladite bande (25, 32, 132) de matériau d'emballage (7, 107).

17. Procédé selon l'une quelconque des revendications 13 à 16, dans lequel ladite sonotrode (5) et/ou ladite enclume (3) sont déplacées dans ladite direction de déplacement (DT) conjointement avec ladite bande (25, 32) de matériau d'emballage (7) tout en mettant en oeuvre lesdits soudage et découpe.

18. Procédé selon l'une quelconque des revendications 13 à 17 comprenant en outre la traction de ladite bande (25, 32) au moins dans ladite direction de déplacement (DT), ladite traction étant mise en oeuvre en aval desdits soudage et découpe, de préférence à une distance (z) desdits soudage et découpe correspondant à la sortie dudit produit à priser oral ensaché (43) en emballage individuel dans ladite direction de déplacement (DT).
